(19)

**Europäisches Patentamt**
**European Patent Office**
**Office européen des brevets**

(11) **EP 4 726 636 A1**

(12) **EUROPEAN PATENT APPLICATION**

(43) Date of publication:
**15.04.2026 Bulletin 2026/16**

(51) International Patent Classification (IPC):
**G06Q 30/0601** (2023.01)    **G06Q 90/00** (2006.01)

(21) Application number: **25189221.2**

(22) Date of filing: **14.07.2025**

(52) Cooperative Patent Classification (CPC):
**G06Q 30/0601; G06Q 90/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.10.2024 IN 202421077862**

(71) Applicant: **Tata Consultancy Services Limited
Maharashtra (IN)**

(72) Inventors:
 • **SRINIVASAN, Suresh
  400607 Thane, Maharashtra (IN)**

 • **KULKARNI, Kedar Avinash
  400607 Thane, Maharashtra (IN)**
 • **CHATTYVNSH, Sriram
  603103 Chennai, Tamil Nadu (IN)**
 • **SENAPATI, Ashok Kumar
  751024 Bhubaneswar, Odisha (IN)**
 • **RAGHAVAN, Rajesh
  600004 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR SECURING PAYMENT INTENT AND OPTIMIZING VALUE STORE SELECTIONS**

(57)    Conventional payment systems require payers to select the payment instrument first and then authorize payments. The payer cannot change payment instrument post authorizing payment as authorization is specific to a value store. The system and method of the present disclosure enables a payment method to be payment instrument/value store agnostic, so that payer gets more flexibility in terms of selecting which value store(s) to use for authorization but not necessarily for honoring the payment. This gives the payer the required flexibility to swap value store(s) post initial authorization but before settlement basis better informed decision by means of recommendations. Similarly on the payee's side, the payee has limited or no visibility of value store until payer presents it for payment. The system and method of the present disclosure gives an added opportunity to the payee to influence payer's selection of value store(s) post initial authorization but before settlement.

**FIG. 9A**

EP 4 726 636 A1

EP 4 726 636 A1

**FIG. 9B**

**Description**

CROSS-REFERENCE TO RELATED APPLICATIONS AND PRIORITY

The present application claims priority to Indian application, Application No. 202421077862, filed in India on October 14, 2024.

TECHNICAL FIELD

The disclosure herein generally relates to payment techniques, and, more particularly, to a system and method for securing payment intent and optimizing value store selections.

BACKGROUND

Digital Payments are now commonplace in today's world, between individuals, between businesses, and/or between individuals and businesses. While there are universally accepted payment methods such as Europay, Mastercard and Visa (EMV) Credit/Debit cards, many payment methods tend to be locally acceptable due to various factors such as geography specific jurisdictions, regulations, currencies and required payment processing infrastructure, and 'required payment processing infrastructure' is perhaps a major limiting factor in acceptance of a payment method, since it can limit the acceptance even within local geography where the payment method is considered valid.

As diverse as payment methods tend to be, the generic process of making a payment by payer to payee involves payment instrument selection, authorization, payment, and settlement.

In a conventional payment method, a payer selects how the payment is to be made and then completes the required payment authorization to share payment details with payee. The payee either in real time or deferred manner, then requests for settlement which transfers the funds into payee's account. This process has evolved and is optimized over the years to address the inherent settlement risk i.e. the risk that payer agrees to make the payment but may default at the time of settling the obligation leading to a loss for payee. The risk is either mitigated with securing payer's authorization prior to making payment and then blocking required funds in payer's account or parking the funds into a separate designated account till the time of settlement.

Another way which is essentially an extension of this measure is a trusted party playing the role of a guarantor on behalf of payer so that risk of default gets transferred from payee to trusted party. A credit card issued by a financial institution is one such example. This process while efficient and effective, brings about certain challenges of its own. For instance, from payer's perspective, the payer needs to decide beforehand which payment instrument to use at the time of payment. Depending upon the maturity of the underlying digital payment processing infrastructure of the market, many times this selection gets limited by compatibility or availability factors. But even in markets with matured digital payments processing infrastructure, this steps inherently assumes that payer is always aware of the best suited payment method in the context of the payment. The payer may not make an informed decision about the use of the payment instrument or a combination of payment instruments beneficial to them due to the following reasons: (i) payer is only concerned about finishing the payment fast rather than worrying about anything else at the point of payment. For example, pressure on completing the payment due to a queue built up behind them in case of merchant payment, (ii) inability to split the payments in different instruments - wherever available, requires manual actions resulting in more friction which gives not so good experience, (iii) recurring pull payments such as mandates are account specific which results in failure of payment in case of insufficient balance - placing the burden of collating required funds in designated account on the payer, (iv) non availability of the payment instrument, which is most beneficial to them, at the time of payment, (v) lack of knowledge about any loyalty points, coupons, offers, etc., that may be available and/or nearing expiry, (vi) lack of knowledge/awareness about which payment instrument usage for the given amount and the payee type shall be the most beneficial to him/her, (vii) payee side restrictions on use of only certain types of payment instruments, (viii) non availability of network connectivity to use certain type of payment instruments, (ix) regulatory restrictions on use of certain payment instruments, (x) security & trust aspects of payment instruments and methods, and (xi) privacy concerns related to audit trail, visibility of payments made by the payers.

Similarly, from a payee's perspective, the Payee is largely concerned about the following aspects while accepting the payments: (a) a confirmed way of knowing if the payment is done by the payer, (b) in cases of recurring payments, payee's concern is about receiving payment on time and not from which account the payment is coming from. Since mandates are account specific, insufficient funds results in failure which is not desired by payee, (c) assurance that the payer and the payment instrument are genuine and not a fraud, (d) lower transaction costs, (e) faster settlement of receivables, (f) reliable network connectivity to ensure reduced or NIL failures of payment processing, (g) an end to end visibility of payments, and (h) preferably minimum spend on payment accepting infrastructure set-up and maintenance.

Likewise, from a financial institution (FI) or a bank perspective, ideally banks/FIs would prefer that their customers i.e., payers use payment instruments provided by them only. However not only banks/FIs have no way to ensure that, often they have no visibility of how their customers i.e., payers are paying. For instance, (i) what payment instrument/method/ is payer using to make payments, (ii) where is customer/payer making payments?, (iii) what is the purpose of making a payment?, (iv) how can bank/FI derive better insights into consumer behaviour and often better products/services?, (v) how to provide innovative products/services while minimizing the potential risk?, and the like

SUMMARY

Embodiments of the present disclosure present technological improvements as solutions to one or more of the above-mentioned technical problems recognized by the inventors in conventional systems.

For example, in one aspect, there is provided a processor implemented method for securing payment intent and optimizing value store selections. The method comprises receiving by a first entity, via one or more hardware processors, a payment request from a first device associated with a second entity, wherein the payment request is specific to a transaction being performed with a third entity; capturing by the first entity, via the one or more hardware processors, a payment honoring intent associated with the payment request; generating by the first entity, via the one or more hardware processors, an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token of the captured payment honoring intent, the first entity blocks a pre-defined amount in the default value store that is specific to the payment request; transmitting by the first entity, via the one or more hardware processors, the encrypted intent specific payment token to the first device associated with the second entity, wherein the encrypted intent specific payment token is transmitted to a second device associated with the third entity, from the first device associated with the second entity; obtaining by the first entity, via the one or more hardware processors, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity; validating by the first entity, via the one or more hardware processors, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token; generating by the first entity, via the one or more hardware processors, one or more recommended value stores based on the validated payment token and a second set of transaction affecting parameters; and identifying by the first entity, via the one or more hardware processors, at least one recommended value store amongst the one or more recommended value stores based on one of (i) a selection of a recommended value store, (ii) an acceptance or rejection of the one or more recommended value stores, or (iii) an expiration time for selection of the one or more recommended value stores; and processing by the first entity, via the one or more hardware processors, a payment settlement specific to the payment request and the transaction based on the at least one identified recommended value store.

In an embodiment, the step of generating the one or more recommended value stores is based on an associated weightage computed for each transaction parameter amongst the second set of transaction affecting parameters.

In an embodiment, the one or more recommended value stores are generated based on at least one of (i) an associated benefit of using one or more value stores in a specific context of the transaction, and (ii) a mapped data of one or more benefits being offered by the third entity with the one or more value stores.

In an embodiment, the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

In another aspect, there is provided a processor implemented system for securing payment intent and optimizing value store selections. The system comprises: a memory storing instructions; one or more communication interfaces; and one or more hardware processors coupled to the memory via the one or more communication interfaces, wherein the one or more hardware processors are configured by the instructions to receive by a first entity, a payment request from a first device associated with a second entity, wherein the payment request is specific to a transaction being performed with a third entity; capture by the first entity, a payment honoring intent associated with the payment request; generate by the first entity, an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request; transmit by the first entity, the encrypted intent specific payment token to the first device associated with the second entity, wherein the encrypted intent specific payment token is transmitted to a second device associated with the third entity, from the first device associated with the second entity; obtain by the first entity, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity; validate by the first entity, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token; generate by the first entity, one or more recommended value stores based on the validated payment token and a second set of transaction affecting parameters; and identify by the first entity, at least one recommended value store amongst the one or more recommended value stores based on one of (i) a selection of a recommended value store, (ii) an acceptance or rejection of the one or more recommended value stores, or (iii) an expiration time for selection of the one or more recommended value stores; and process by the first entity, a payment settlement specific to the payment request and the transaction based on the at least one identified recommended value store.

In an embodiment, the step of generating the one or more recommended value stores is based on an associated weightage computed for each transaction parameter amongst the second set of transaction affecting parameters.

In an embodiment, the one or more recommended value stores are generated based on at least one of (i) an associated benefit of using one or more value stores in a specific context of the transaction, and (ii) a mapped data of one or more benefits being offered by the third entity with the one or more value stores.

In an embodiment, the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

In yet another aspect, there are provided one or more non-transitory machine-readable information storage mediums comprising one or more instructions which when executed by one or more hardware processors cause securing payment intent and optimizing value store selections by receiving by a first entity, a payment request from a first device associated with a second entity, wherein the payment request is specific to a transaction being performed with a third entity; capturing by the first entity, a payment honoring intent associated with the payment request; generating by the first entity, an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token of the captured payment honoring intent, the first entity blocks a pre-defined amount in the default value store that is specific to the payment request; transmitting by the first entity, the encrypted intent specific payment token to the first device associated with the second entity, wherein the encrypted intent specific payment token is transmitted to a second device associated with the third entity, from the first device associated with the second entity; obtaining by the first entity, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity; validating by the first entity, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token; generating by the first entity, one or more recommended value stores based on the validated payment token and a second set of transaction affecting parameters; and identifying by the first entity, via the one or more hardware processors, at least one recommended value store amongst the one or more recommended value stores based on one of (i) a selection of a recommended value store, (ii) an acceptance or rejection of the one or more recommended value stores, or (iii) an expiration time for selection of the one or more recommended value stores; and processing by the first entity, a payment settlement specific to the payment request and the transaction based on the at least one identified recommended value store.

In an embodiment, the step of generating the one or more recommended value stores is based on an associated weightage computed for each transaction parameter amongst the second set of transaction affecting parameters.

In an embodiment, the one or more recommended value stores are generated based on at least one of (i) an associated benefit of using one or more value stores in a specific context of the transaction, and (ii) a mapped data of one or more benefits being offered by the third entity with the one or more value stores.

In an embodiment, the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system/first entity for securing payment intent and optimizing value store selections, in accordance with an embodiment of the present disclosure.

FIGS. 2A and 2B depict an exemplary flow chart illustrating a method for securing payment intent and optimizing value store selections, using the system of FIG. 1, in accordance with an embodiment of the present disclosure

FIG. 3 depicts a flow diagram illustrating a method of generating the encrypted intent specific payment token, by using the system of FIG. 1, in accordance with an embodiment of the present disclosure.

FIG. 4 depicts a flow diagram illustrating a method for validating the encrypted intent specific payment token obtained from the second entity, in accordance with an embodiment of the present disclosure.

FIG. 5 depicts a block diagram illustrating a benefit computation engine comprised in the first entity, in accordance with an embodiment of the present disclosure.

FIG. 6 depicts a block diagram illustrating a recommendation engine comprised in the first entity, in accordance with an embodiment of the present disclosure.

FIG. 7 depicts a visual representation of the recommendation engine solving problem statements for generating possible combinations of value stores, in accordance with an embodiment of the present disclosure.

FIG. 8 shows a logical segregation of all possible combinations of value stores eligible for getting used in a payment in specific context, in accordance with an embodiment of the present disclosure.

FIGS. 9A and 9B depict a flow diagram illustrating a method for generating one or more recommended value stores based on the validated payment token and a second set of transaction affecting parameters, in accordance with an embodiment of the present disclosure.

FIG. 10 depicts a flow diagram illustrating a method for processing a payment settlement specific to the payment request and the transaction based on the at least one identified recommended value store, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As described above, digital Payments are now commonplace in today's world, between individuals, between businesses or between individuals and businesses. While there are universally accepted payment methods such as Europay, Mastercard and Visa (EMV) Credit/Debit cards, many payment methods tend to be locally acceptable due to various factors such as geography specific jurisdictions, regulations, currencies and required payment processing infrastructure, and 'required payment processing infrastructure' is perhaps a major limiting factor in acceptance of a payment method, since it can limit the acceptance even within local geography where the payment method is considered valid.

Hence, there is a need for a system and method that allows a payer to delink the act of selection of payment value store(s) from the act of making payment at the time of payment and instead postpone the decision till such time that is closer to settlement of funds when a better-informed decision can be made. More specifically, there is a need for a system and method that allows a payee to delink the acceptance of any value store(s) from physical infrastructure specific to value store and to get a guarantee of settlement of funds while also getting an opportunity to nudge payer towards using value store(s) preferred by Payee. Embodiments of the present disclosure provide system and method for securing payment intent and optimizing value store selections. More specifically, the system generates an encrypted intent honoring payment token by linking a default value store of their choice from a token issuer/issuer (e.g., financial institution/bank, and the like). The issuer blocks the funds/reduces the credit limit on default value store. The generated encrypted intent honoring payment token is then transmitted to a merchant (e.g., payee) through the payer from the issuer which guarantees transfer of funds. The payee/merchant validates the token by submitting it back to the issuer. The issuer then performs token validation and along with token confirmation and also informs the payee of the type of value store tagged against the token. The payee may choose to make a counteroffer to the payer via the issuer to use a different type of value store (of payee's preference) in exchange for added benefits such as various discounts, etc. The issuer after validating the token, analyses the payment context and basis payer's preferences generates a set of recommended value stores and communicates to payer on which value store(s) the payer should use that are best suited for payment in that context. The payee's counteroffer is one of the factors considered in arriving at these recommendations. The payer may either accept or reject or not take any action on recommendations. In case of payer's acceptance, recommended value store(s) are used to settle funds with payee. In case of rejection or inaction (beyond a cut off time), the default value store mapped to token is used to settle funds with payee.

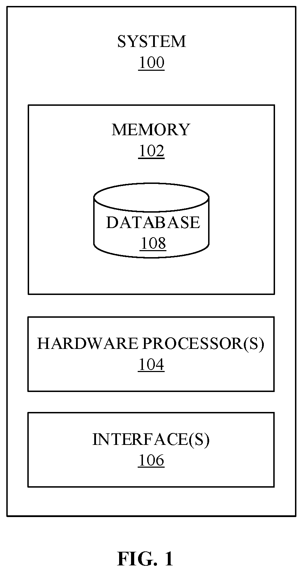

Referring now to the drawings, and more particularly to FIGS. 1 through 10, where similar reference characters denote corresponding features consistently throughout the figures, there are shown preferred embodiments, and these embodiments are described in the context of the following exemplary system and/or method.

FIG. 1 depicts an exemplary system/first entity 100 for securing payment intent and optimizing value store selections, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to various entities (e.g., issuer(s)/financial institution/bank, end consumers/customers/payer/second entity/buyer, merchant/vendor/third entity/seller, and the like. The database 108 further comprises various techniques and/or machine learning models that when executed enable the system 100 to perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

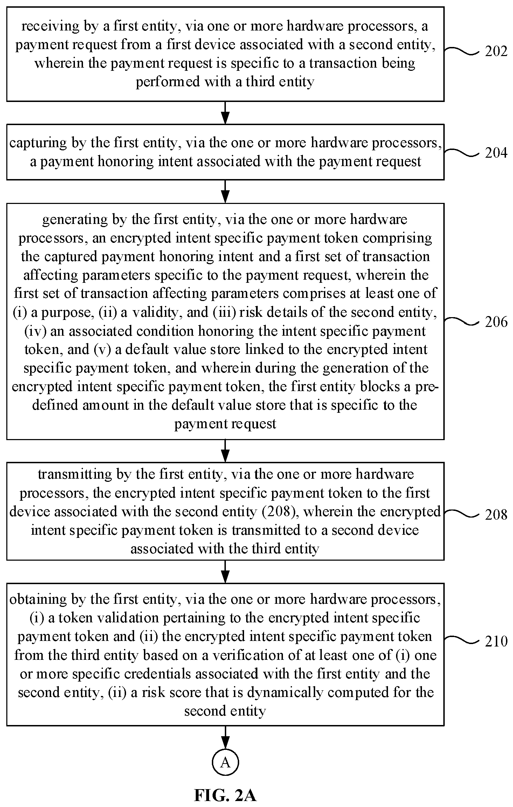

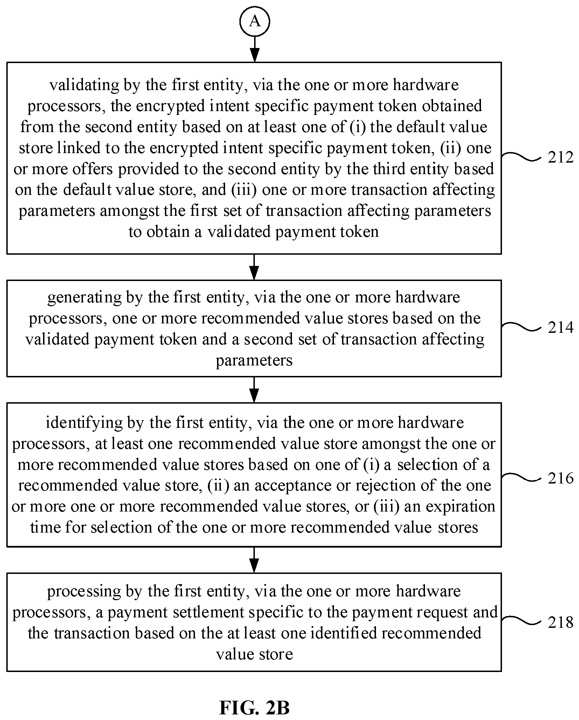

FIGS. 2A and 2B, with reference to FIG. 1, depict an exemplary flow chart illustrating a method for securing payment intent and optimizing value store selections, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the flow diagram as depicted in FIGS. 2A-2B, and FIGS. 3 through 10. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the first entity 100 receives, via the one or more hardware processors 104, a payment request from a first device associated with a second entity. The payment request is specific to a transaction being performed with a third entity. The first entity is an issuer such as a financial institution, a bank, or an entity that is responsible for enabling the second entity perform the transaction with the third entity and further recommend one or more value stores for processing the settlement (e.g., amount) associated with the transaction. The expressions 'first entity', 'financial institution', and 'bank' may be interchangeably used herein. For instance, the first device may be a mobile communication device, a computer system, and the like that is configured to perform (and/or capable of performing) one or more transactions through appropriate interfaces involving purchase of one or more products and/or services by the second entity (e.g., end user/consumer/customer, buyer, and the like). The expressions 'second entity', 'end user', 'customer', 'consumer', 'buyer', and 'payer', may be interchangeably used herein. The transaction is being performed by the second entity with the third entity such as a merchant/seller who sells or is capable of selling the one or more products and/or services. The expressions 'third entity' may also be referred to as 'merchant', 'seller', 'vendor', and/or 'payee' and may be interchangeably used herein.

At step 204 of the method of the present disclosure, the first entity captures, via the one or more hardware processors 104, a payment honoring intent associated with the payment request. The payment honoring intent is associated with the payment request, representing the second entity's genuine intent and is signified by granting authorization on a specified value store to block funds. The funds are blocked to honor payment to the third entity for some specified purpose under some specified conditions up to a certain limit within a certain time frame as mentioned by the second entity while making the request to the first entity.

At step 206 of the method of the present disclosure, the first entity generates, via the one or more hardware processors 104, an encrypted intent specific payment token (also referred to as 'token' and interchangeably used herein) comprising the captured payment honoring intent and a first set of transaction affecting parameters specific to the payment request. The first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request. The first set of transaction affecting parameters are configurable by the first entity 100 and these may vary based on the type of second and third entity and transaction involved therebetween. The above examples of the first set of transaction affecting parameters shall not be construed as limiting the scope of the present disclosure. The steps 204 and 206 are better understood by way of following description:

The first entity 100 upon receiving the payment request, first tries to determine the outstanding risk exposure of the payer. This involves the system 100 computing a risk score for the second entity by considering past transaction history as well as any outstanding tokens which are yet to be settled by the second entity. Based on the historical trend the system 100 may adjust the acceptable exposure threshold dynamically. If the second entity's total exposure after considering present request, stands within acceptable threshold limit then system 100 accepts the payment request for generating the encrypted intent specific payment token. If not, then the system 100 rejects the generation request of the encrypted intent specific payment token.

After accepting the generation request of the encrypted intent specific payment token, the system attempts to put a hold/lien on the default value store that payer has specified while requesting the encrypted intent specific payment token. If the system 100 is unable to put a lien, then the system 100 rejects the generation request of the encrypted intent specific payment token.

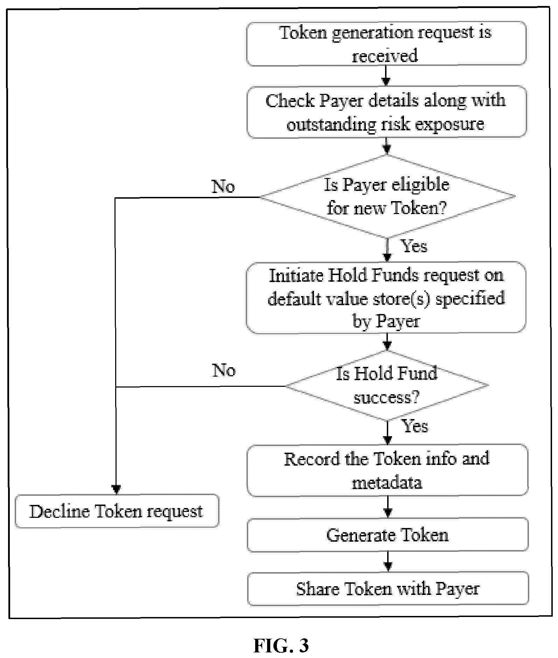

If the system 100 is able to block the required funds on default value store, then the system 100 records details of the encrypted intent specific payment token along with value store and lien details and proceed to generate the encrypted intent specific payment token (e.g., cryptographic token). The intent specific payment token is generated by using one or more encryption techniques known in the art. The encrypted intent specific payment token comprises at least one of a first entity identifier, a unique token identifier, metadata associated with the payment token (e.g., generation type, a verification type, a generation time, and the like), an amount, usage/purpose, (if provided by the second entity such as third entity/payee identifier, service, product, etc.), location, validity, second entity identifier, first device identifier, a payment tender type, a default value store identifier, a token status, a token usage status, a cryptographic signature/block, and the like. The above examples of details stored in the encrypted intent specific payment token shall not be construed as limiting the scope of the present disclosure. The steps involved in generating the encrypted intent specific payment token are depicted in FIG. 3. More specifically, FIG. 3, with reference to FIGS. 1 through 2B, depicts a flow diagram illustrating a method of generating the encrypted intent specific payment token, by using the system 100 of FIG. 1, in accordance with an embodiment of the present disclosure.

The encrypted intent specific payment token is a tokenized intent of the second entity to deliver on payment obligation to the third entity, backed by a trusted intermediary i.e. the first entity 100. The encrypted intent specific payment token itself is not a value store or even a surrogate for value store. It is rather a wrapper that encapsulates the payment context, the second entity's intent to eventually honor the payment and the first entity's guarantee to ensure fulfillment of payment to third entity.

Conventional practices of payment tokenization of a value store (typically used only for payment cards), refers to creation of alias of the unique identifier of the payment instrument from security perspective. The intent for tokenizing a payment card is to hide or protect the actual identifier of the card. The system 100 of the present disclosure does not tokenize value store but the second entity's intent to pay. Therefore, the encrypted intent specific payment token serves as a digital proxy or enabler to delink the selection of a particular value store at the time of exchange of payment information between the second entity and the third entity, in such a way that value store can be changed/replaced after exchange of payment information but before the settlement of payment obligations. Thus, technically, the encrypted intent specific payment token needs to maintain following aspects: (i) the second entity's intention: this is captured using (a) information that the second entity submits at time of generating the encrypted intent specific payment token such as a maximum payment value, default value store tagged and intended payment period represented by the validity, (b) digital signature/credentials of the second entity, (c) data that gets gathered and tagged against the encrypted intent specific payment token such as time and location of sharing, (d) the third entity's identification, (e) the second entity's device identifier, and so on, (ii) the first entity's guarantee: this is captured using (a) an additional second entity's information shared by the first entity in the encrypted intent specific payment token such as second entity identifier (or alias), a risk score of the second entity, and so on, and (b), digital signature/credentials of the first entity.

The default value store linked to this payment honoring intent serves as a risk mitigation tool/logic and not the actual payment instrument using which payment is made. In fact, the specific details of the value store (e.g. card number, voucher number etc.) are not even present inside the encrypted intent specific payment token. In a variation of the solution provided by the system 100, the first entity 100 may even provide a facility to the second entity to generate the encrypted intent specific payment token without linking any default value store. In such a scenario, the first entity 100 treats such an option as a pure risk instrument and hence may choose to limit such a facility to select the second entity depending upon an assessment of a risk profile of the second entity and historical association with the first entity. The first set of transaction affecting parameters is illustrated by way examples depicted in below Table 1.

Table 1

| Sr. | Token Data | What does the token contain |
|---|---|---|
| 1 | Issuer Identification | Which is the bank responsible for token generation |
| 2 | Unique Token ID | Generated basis an algorithm |
| 3 | Generation Type | Was it generated Online or Offline |
| 4 | Verification Type | Is offline verification allowed |
| 5 | Amount | Max. Amount Allowed |
| 6 | Usage | Single Or Multi Use |
| 7 | Generation Time | DDMMYYYYHHMMSS |
| 8 | Validity | DDMMYYYYHHMMSS |
| 9 | Payer Identification Key | Generated based on issuer's algorithm |
| 10 | Token Status (Payer perspective) | Active, Expired, Cancelled |
| 11 | Token Usage Status | Declined, Accepted |
| 12 | Cryptographic Signature/Block | To be used to verify that the token is genuine - security aspects |
| 13 | Payer's Device Identifier | Device from which the token was generated offline OR |
|  |  | Device from which the online token generation request originated |
| 14 | Payement Tender Identifier | Tender Type Code OR NA in case of Tender Type not decided/absent |
| 15 | Purpose | intended purpose specified by payer or issuer |
| 16 | Condition | Conditions associated with token; for Payee to fulfill to receive payment |
| 17 | Risk score | Risk score of Payer as computed by Issuer |
| 18 | Filler Field 1 |  |
| 19 | Filler Field 2 |  |
| 20 | Filler Field 3 |  |
| 21 | Filler Field 4 |  |

(continued)

| Sr | Metadata | Added at the time of sharing of token |
|----|----------|----------------------------------------|
| 1 | Token share method | QR code, NFC, BLE etc. |
| 2 | Token share time | DDMMYYYYHHMMSS |
| Sr | Other info | Basis which restrictions are put in algorithm and/or app etc. |
| 1 | Token type | Type A, Type B, ..., Type X etc. (based on risk profile of payer, online / offline usage etc.) |

As mentioned above, for generating the encrypted intent specific payment token, the system 100 involves a process where the second entity submits a request to with the first entity with certain information (as listed above) with regards to the intended use of the encrypted intent specific payment token. This may include specifying the maximum amount up to which the encrypted intent specific payment token can be used, the time validity or expiry period, intended recipient with whom the second entity intends to share the encrypted intent specific payment token, etc. The goal from the first entity's perspective is to get some understanding of the context in which the payment is expected to happen.

A vital part of the encrypted intent specific payment token generation is the risk mitigation from both the first entity and the third entity's perspective. The first entity may ask the second entity to specify a default value store at the time of requesting the encrypted intent specific payment token generation. The purpose of this step is to ensure that required funds can be blocked so that payment can be honored during eventually during the settlement step.

The first entity 100 presents the second entity with a list of suitable value stores against which such a lien or fund blocking facility is available and it is accessible to the first entity. This information is stored in the second entity's database as well as value store master data in the system 100 (e.g., the database 108/memory 102).

At the time of processing the encrypted intent specific payment token generation request, the system 100 uses this information to block the requested amount against the default value store. It also checks that the time frame for keeping these funds blocked at least covers the token validity as requested by the second entity.

The system 100 then logs the token data in a token master database (not shown in figures, but may be part of the database 108), including the request information shared by the second entity, along with the audit data such as various time stamps. The encrypted intent specific payment token therein generated/constructed includes the following:

1. A token identifier, that is a unique for each token that the system 100 generates,
2. A first entity token data that is encrypted using its private key. Hence it can only be decrypted by the first entity itself or by any party (second entity in this context) that has the first entity's public key.

    a. First entity token data: If made up of multiple parameters.

        i. Token generation time: Date-time stamp of when token was generated.
        ii. Token validity: indicating how long the token is valid. This can be either an absolute date-time value or a relative one like a time value in hours since the token generation date-time. This can be either be a payer input while requesting the token generation or it can be a value computed by the first entity depending upon the second entity's risk profile.
        iii. Token purpose (or purpose): Optional information that can be populated by the first entity basis inputs received from the second entity during the token generation request. This could be intended service/product/avenue at which token is intended to be used.
        iv. Token condition (condition): Optional information that is provided by the second entity while requesting the token generation. This can include specifying certain conditions that the third entity needs to fulfil (and the first entity needs to verify) to process the settlement of the token. For instance, the first entity/second entity may specify third entity's identity and mandate that it be verified before settlement or the first entity/second entity that the third entity needs to submit certain proof (of delivery/to) to claim the payment.
        v. Token amount: Maximum transaction amount up to which payment can be made using this token.
        vi. Default value store type: Value store type mapped by the first entity against this token e.g., credit card, debit card, bank account, wallet, brand, digital asset, physical asset, etc. Only the type is shared and not the exact value store identifier.
        vii. Second entity identifier: identifier of the second entity as issued by the first entity.
        viii. Risk score of the second entity: For each of the token generation requests from the second entity, a risk score is computed by the first entity. Numerical score from x to y (where x and y are real numbers and can take a range of 1 to 10, in one example embodiment of the present disclosure) as assigned by the first entity to the second entity basis risk score computation.

ix. Data: The basis of risk score calculation is the second entity's data. The score is mainly computed based on both static and dynamic data related to the second entity. The following payer data attributes are considered for risk score computation and these attributes are configurable dynamically by the first entity.

1. Static data which may include such as profession of the second entity, demographic data, transaction history, an average account balance, spending pattern, outstanding payment pattern, late payment history, and the like.

2. Dynamic Data may include such as an aging factor of outstanding payment, utilization of available fund, overspending behavior, existing loans.

3. Assigning Weights: Each attribute is given a positive or negative weight according to its recency. For example, a history of missed payments might carry a higher negative weight than the second entity demographic data.

4. Models used for Score computation. The first entity uses a Logistic Regression model for computing the risk score of the second entity. The above examples of the Logistic Regression model used for risk score computation shall not be construed as limiting the scope of the present disclosure, and any other machine learning model may be implemented by the system and method for risk score computation. This score represents the second entity's likelihood of generating the token. The risk score of the second entity is calculated based on one or more configured features, such as but are not limited to time-window-based and event-based features risk score are calculated for the second entity individually, whereas the overall features risk score is calculated for the payer collectively. The time-window-based feature risk score is calculated based on the payer attribute values along with its weight in the last t (hour/day/-week/month/year) through it (t takes any positive integer value). Event-based features risk score is calculated for a particular duration range (start duration to end duration), take into consideration the outcome of the payer attribute values along with its weight in the past e events where it takes any positive integer value. Overall features risk score is calculated on overall payer data without any time or event data characteristics.

The risk score that is generated falls on a spectrum, with higher scores indicating higher risk and vice versa. The first entity establishes/configures one or more thresholds based on their risk tolerance. The second entity with risk score less than the thresholds are more likely to be approved for token generation request favorable terms than the ones with comparatively higher scores.

b. Encrypted second entity's data: This is data shared by the second entity at the time of requesting the token. This is encrypted using the second entity's private key. Hene is can only be decrypted by the second entity or by the first entity who has access to the second entity's public key. Since the third entity does not have access to the second entity's public key, it cannot decrypt the second entity's encrypted data.

3. Checksum: This is a checksum value of the token. The checksum includes details such as token identifier, encrypted first entity data (e.g., first entity token data, and second entity payment request data, and the like.).

The encrypted intent specific payment token is generated by the first entity 100 using a token generation technique known in the art, with the above predefined configurable parameters stored in the memory 102 using public key, private key, and digital signature. The encrypted intent specific payment token is maintained in a highly secure token vault (not shown in FIGS.). The token vault maintains the mapping of token identifier to payment sensitive information.

At step 208 of the method of the present disclosure, the first entity 100, via the one or more hardware processors 104, transmits the encrypted intent specific payment token to the first device associated with the second entity. The encrypted intent specific payment token is transmitted to a second device associated with the third entity, from the first device associated with the second entity. The token sharing itself is done using any of the conventional secure information sharing practices used in the payments industry. The second entity can share the encrypted intent specific payment token with the third entity using any of the communication techniques as known in the art such as near field communication or any other proximity sharing means, HTTPS APIs, QRC scanning, and the like. The encrypted intent specific payment token being a complex object having two separate pieces of encrypted blocks and checksum measures can only be useful when a receiving party has access to required encryption keys. The first entity enables the third entity by means of receiving and verifying the encrypted intent specific payment token by providing required software components that can be embedded in the third entity's channels such as mobile application, web, point of sale (PoS) terminal, kiosk, backend servers, etc. associated with a second device (e.g., mobile communication device, a computer system, and the like). This enables the third entity to verify if the encrypted intent specific payment token is genuine (using first entity's public key + checksum) even in cases where the third entity may not have network connection to submit the encrypted intent specific payment token to the first entity for verification in run-time.

The following controls are implemented to share the encrypted intent specific payment token by the first entity to the second entity and from the second entity to the third entity.

1. Mutual Authentication: The Trusted Execution Environment (TEE) provides a secure environment for user and device authentication through NFC and Bluetooth channels. Both Payer and Payee must authenticate each other before initiating the transaction, ensuring that only authorized parties can participate in the transaction.

2. Token Encryption: The tokens used in the transaction are encrypted using private key to ensure that they cannot be intercepted or modified by unauthorized parties. This ensures the confidentiality and integrity of the transaction.

3. Multi-Signature: The transaction is protected by a multi-signature protocol that requires the approval of Payer and Issuer before it can be processed. This ensures that the transaction is authorized and prevents any single party from initiating a fraudulent transaction.

4. Digital Signatures: The TEE uses digital signatures to ensure the authenticity of the transaction and prevent tampering or impersonation. This provides a high level of assurance that the transaction is legitimate and authorized by Issuers and Payer.

5. Secure Channel: The transaction is conducted over a secure channel to prevent interception or eavesdropping. The TEE can use a variety of secure channels, such as Bluetooth Low Energy (BLE) or Near Field Communication (NFC), to ensure the confidentiality and integrity of the transaction.

At step 210 of the method of the present disclosure, the first entity 100 obtains, via the one or more hardware processors 104, (i) a token validation pertaining to the encrypted intent specific payment token and (ii) the encrypted intent specific payment token from the third entity based on a verification of at least one of (a) one or more specific credentials associated with the first entity and the second entity, (a) the risk score that is dynamically computed for the second entity. The above step 210 is better understood by way of the following description: The third entity validates the token using the following validation process.

1. Token signature verification: The third entity validates the digital signature on the tokens to ensure that they were issued by a legitimate authority and have not been tampered with. For valid tokens, the third entity can now access the first entity's data and access following parameters shared by the first entity.

2. Token purpose: The third entity may choose to not accept a token if the purpose indicated by the first entity does not match with its own context. For instance, the first entity may have put a restriction on token usage so that the second entity can only use them at Grocery stores (e.g., disaster relief disbursement or work-related expenses by employer), however the second entity shares this token with a payee which is car rental company. Then, the payee may refuse to accept the token. It is also possible that the second entity requested the token to be used at a particular payee but is now sharing it with a different payee. If the first entity has mentioned the intended third entity details, then the other payee may refuse to accept the token thinking the token was probably rejected by the first payee.

3. First entity risk score: The third entity can use this parameter to decide whether to proceed with this mode of payment or reject it and instead demand that the second entity uses some other mode of payment. This is a risk mitigation flexibility provided by the first entity to the third entity. The third entity may make this decision on the basis of their internal risk policies. This parameter can also be used by the third entity in deciding which counteroffers to push to the second entity. For example, if the third entity perceives the first entity to be risky, then it may decide to push counteroffers that are not of type 'credit' but rather the ones that guarantee payments.

4. Default value store type: The third entity can read this parameter to understand how the second entity will pay by default (in case of rejecting or not acting on the recommendations). Basis this field, the third entity may choose to push any counteroffers to the first at the time of submitting this token to the first entity for final validation and settlement. For instance, the third entity may come to know the default value store tagged by the second entity is a credit card. Since this is likely to cost the third entity more (in terms of fees), the third entity may push one or more counteroffers like if the second entity switches to account based payment method (which is cheaper and faster than cards from third entity's perspective) then the third entity is ready to offer further 1% additional discount on total amount. These counteroffers are taken into consideration by the first entity at the time of making recommendation to the second entity. For every counteroffer the third entity passes to the first entity, the third entity also needs to be mentioned the additional time it is willing to wait for settlement to take place should the second entity accept its counteroffer.

5. Second entity identifier: Over time the third entity may develop its own set of analytics of the second entity by using this field.

6. Token validity: The third entity may use this field to estimate the likelihood of end-to-end processing getting completed within its settlement cycle agreed with the first entity. This may become another factor in deciding whether to accept the token or not.

7. Token ownership validation: The third entity can also verify token by passing it to the first entity and confirming the authenticity of the token. The first entity 100 verifies the token using its own public key, digital signature and SHA3.

8. Secure local validation: The validation process is performed locally within the third entity's ecosystem with digital signature and public key of the first entity before initiating the transfer. This helps to prevent the transfer of counterfeit or tampered tokens, protecting the interests of both parties.

The above step is further better understood by way of the following description: Once Payee receives the token from payer, the payee may perform basic validation like verifying issuer's signature using the issuer given toolkit and any other visual checks viz. Tick mark, uniquely verifiable serial number, etc. However, for complete verification, the payee must submit the token back to the token issuer. The issuer may give additional capabilities to the payee for offline verification in the form of software toolkits and libraries. **In** a variation of this step, the payee may submit additional transaction metadata to the issuer pertaining to payment context. The payee may read the issuer data from the token and apply their own decision matrix. For example, the payee may set a risk threshold above which it may automatically want to reject the token received from the payer. The payee may want to cross the check the original purpose mentioned by the issuer in the token. The payee checks the default value store type indicated by the issuer in the token and may want to nudge the payer to use a different value store. **In** such a scenario, the payee may pass its own counter offers while submitting the token back to issuer. Against each such offer the payee may also indicate additional time it is willing to provide to the payer for making a decision which in turn may lengthen the settlement time for the payee.

At step 212 of the method of the present disclosure, the first entity 100 validates, via the one or more hardware processors 104, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token. The above step 212 is better understood by way of the following description:

Post ensuring that the token submitted by the payee/third entity is genuine, the first entity performs the following checks and/or actions.

1. Checking the token security parameters like encryption signatures, checksum data, etc.

2. Checking the token validity - the token needs to be valid when shared by the second entity with the third entity and the related timestamp cannot be older than 'x day' (e.g., say 1 day) from when the third entity has submitted the token for settlement with the first entity.

3. Checking the token amount - The original amount for which token was requested cannot be less than the transaction amount for which the third entity is requesting the settlement.

4. Checking the token purpose - If the second entity had specified or the first entity had assigned a specific purpose to the token while generating it, the first entity now checks the submitted token was used for same purpose. The purpose can be specified in various ways like LOVs of products (e.g. food, electronics, etc.), services (tax payments, lodging, travelling etc.), locations (physical locations like cities, districts, etc.), types of establishments (hospitals, garages, education institutes, etc.), etc.

5. Checking the token conditions - If the second entity or the first entity had assigned any conditions to the token at time of generation, then the first entity now verifies if the conditions are met. The conditions can be specified in various ways, for example, verification of age, address, identity, submission of proof like documents, challans, etc.

6. Checking the Hold/lien on default value store - The issuer/first entity once again verifies if the amount hold/lien placed on default value store assigned by the payer/second entity is still valid and usable for the token.

7. Checking if the payee/third entity has submitted any counter offers while demanding the settlement of the token.

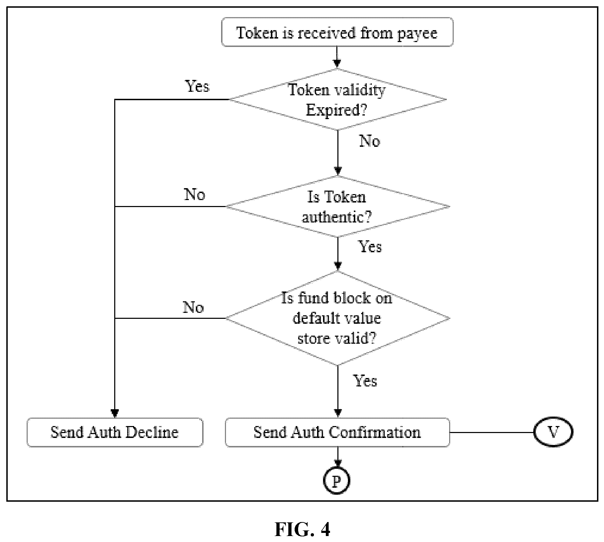

The above steps are further better understood by way of the following description:
Once the first entity receives the token back from payee/third entity, it first performs basic sanity validations such as ensuring the token is genuine i.e., generated by the first entity itself and has not been tampered with using the applicable cryptographic signatures and hash blocks. Post this the first entity verifies if the token is still within validity period, as specified during token generation step. If any of these checks fail, the first entity can send a negative response to the third entity indicating that the third entity should not be accepting this token as a guarantee to pay from the second entity. If the token is, however, authentic and valid, the first entity reverifies the block/lien put on the tagged default value store during the token generation step. This is to ensure that funds have remained blocked and hence the promise from the second entity still holds true. If all the checks pass, the first entity confirms a positive response to the third entity, essentially indicating the acceptance of token for settlement to occur at a later point in time. The first entity stores the counteroffers from the third entity for future consideration while making recommendations to the second entity. This completes the token validation process. FIG. 4, with reference to FIGS. 1 through 3, depicts a flow diagram illustrating a method for validating the encrypted intent specific payment token obtained from the second entity, in accordance with an embodiment of the present disclosure.

At step 214 of the method of the present disclosure, the first entity 100 generates, via the one or more hardware processors 104, one or more recommended value stores based on the validated payment token and a second set of transaction affecting parameters. The above step of 214 is better understood by way of the following description:

The issuer/first entity 100 treats receipt of authentic token from the payee as an implicit request for including the transaction in settlement batch as per agreed upon settlement schedule. To process the settlement for this transaction, the issuer/first entity begins the process of making a recommendation to the second entity on the best combination of value stores to be used in the context of the payment. The system/first entity 100 begins by trying to understand the payment context i.e., who made the payment, to whom, why, where, when, etc. This is accomplished by enriching the payment data by gathering all the token data and various transaction metadata collected during the earlier steps from token generation to token validation. The system 100 uses its parsing algorithms to attach contextual tags against the transaction that can be used to better understand the context of the transaction.

The system 100 then uses these context tags against the payer information available with it to shortlist the various value stores stored by the payer. It may also include any offers which the issuer wants to push on its own. This is done by using negation logic i.e., by eliminating the value stores that are not appliable in payment context. This involves checking individual value stores of the payer against the rules set up in payment master rules component (not shown in FIGS.). The payment master rules contain definitions of all the value store types, their governing rules as specified by governing bodies and their applicability in various contexts. For example, a food voucher or a card can only be used for payments made for edible food items at merchants classified as restaurants or for groceries bought from merchants classified as a food retailer.

Once the system/first entity 100 shortlists the payer's value stores that can be used on the payment context, it then computes potential benefits that can be availed using individual value stores in isolation. This is achieved by a benefits compute/computation engine component (comprised in the memory 102) by referring to payment master rules that have value store definitions and properties. It has the latest reference data for individual value stores regarding various properties such as value type (currency, points, discounts etc.), present value, conversion rates, validity, expiry, terms and conditions (T&C), related offers, etc. The benefit to the payer can be in different forms such as getting additional discounts on final payable amount, getting a cashback or bonus, earning rewards, usage of points that are about to expire, and so on. Some of the benefits considered may include any counteroffers made by the third entity during the token authentication process. The system computes the benefit for individual shortlisted value stores independently.

Before getting into how benefits/offers are computed, it is important to understand what benefits are being referred to in the system and method of the present disclosure. Benefits/offers could be of following nature: (i) discount on the payment amount, (ii) cashback on the payment, (iii) earning reward points on payment, (iv) redemption of accumulated reward points, (v) redemption of vouchers/coupons, (vi) earning new voucher/coupon/code, and the like.

These benefits could further be viewed as additional factors, for example, some payment card may provide more reward points than others or in certain context (e.g., such as specific service or merchant) a card may provide additional reward points (called accelerated rewards) or may be some vouchers or reward points may be nearing expiry and hence it makes sense to redeem them rather than using available credit or balance to pay.

The aim of benefit computation engine comprised in the first entity 100 is to compute the potential benefits associated with individual value stores of the payer if used in the context of the payment. This means the benefit computation engine needs to understand which value stores the payer has, understand properties i.e., offers, limits, terms & conditions associated with individual value stores, e.g. validity of a voucher, amount limit on a gift card, reward rate on a credit card, redemption rate on reward points etc., understand the cross-compatibility of various available and applicable value stores to determine which value stores can be combined if required to make the payment.

This is achieved through following components: (a) value store master data, (i) value store title/name, (ii) value stores such as cards - Credit/ Debit/ Prepaid/ Corporate/ Forex, etc., Accounts - Checking/Savings/Wallet/Overdraft/Loan/Credit line held at authorized Financial Institutions like banks, non-banks , FinTechs, wallet issuers etc., Vouchers/Coupons - prepaid/gift/value/relative value (like discounts, cashbacks basis %), Loyalty/Reward accounts - with value or points balance, Cash, Crypto Currencies - private or Central Bank Digital Currencies, (iii) Value store type (currency/points/subscription), (iv) Issuer details such as Issuer name, issuer LEI (Legal entity identifier), (v) Currency (specific currency if applicable), (vi) Conversion rate in case the value store is in different currency or requires conversion from points to currency etc., (vii) linked offers such as Offer/Benefit type, Value type - absolute, derived, derived value formula, value, maximum limit on benefit value, minimum eligible amount, usage type - single use/ multiple use, an expiry date, for value stores of the type BNPL / Pay Later - the issuer system will need to dynamically fetch offers from such 3rd party issuers, (viii) the Issuer may additionally include offers of its own BNPL products for Payer's consideration, and (ix) Linked T&C, (b) Payer data such as payer Id and demographics - age, gender, payer risk profile information - Either risk score or Risk parameters like income range, industry risk score (e.g. CIBIL), delinquency rate, relationship history, which products Payer already holds with issuer, etc., payer's value stores, payer's transaction history - deriving contextual insights from historical data e.g. a payer may shop frequently at specific avenues or specific value stores, payer may not use certain value stores for threshold below certain limits etc., and payer's current outstanding token data - e.g., tokens generated but not yet used, tokens used but not yet settled etc. This is used by the Issuer to compute total risk exposure to the Payer and accordingly adjust future recommendations to include or exclude unsecured credit-based instruments like credit cards. (c) Payment master rules - This is component is logical collection of various rules and logic that are prevalent in payment industry including but not limited to Mapping of value stores to payment channels, methods e.g. a voucher code cannot be used at PoS machine but can be used in mobile app or web, mapping of value stores to MCC categories and product codes e.g. a Food card cannot be used for buying fuel from fuel station. OR Travel card cannot be used for buying electronic goods or over the top (OTT) subscriptions, etc., mapping of value stores to specific payees (as in case of vouchers, coupons) e.g. Merchant issued promotional vouchers or gift cards, Travel operator issued discount pass for student or senior citizens, etc., mapping of cross-compatibility between value stores (useful for creating combinations) e.g. a credit card can be used in combination with reward points, but using two credit cards in a single transaction can lead to bad customer experience and hence they cannot be called cross compatible or payment card (e.g., credit card or debit card) cannot be used with Account-to-Account mode of payment, etc., operating guidelines specific to value stores or rails on which these value stores are processed. For example, working hours, batch intervals, min and max amounts etc. Some of these will need to be fetched dynamically as regulators may change them from time to time, downtimes specific to any value stores/rails, run-time Status of the payment rails and issuers connectivity to rails. For example, a rail may be experiencing temporary disruption or network connectivity of the issuer, etc. These rules are stored in part as database configurations, in part as rules like in a rule engine and in part fetched dynamically from respective regulatory/governing systems.

The steps involved in the benefits compute engine include the following:

1. Understand payment context

a. Which merchant, which location, which channel, which method (request to pay, push payment, contactless, QR scan etc.)
b. Which products and which services

2. Take payer's value stores and find which ones can be used in this context - filter out those which cannot be used.
3. For each shortlisted value store - what potential benefit can be availed and how much if used in this payment.
4. Pass on this list to the recommendation engine.

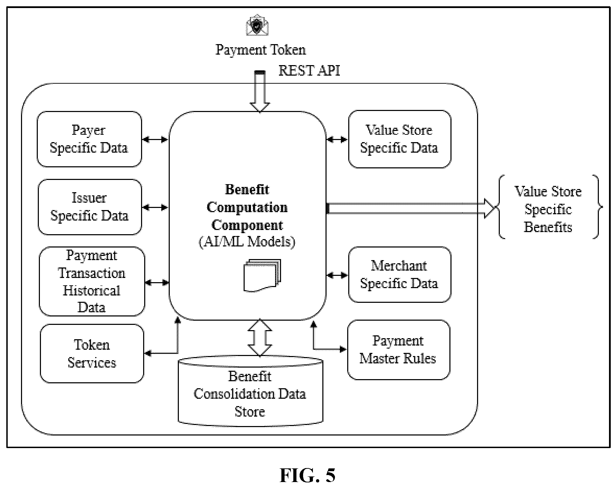

The benefit computation component takes payment token as input and provides value store specific benefits for the payment context. This component has access to one or more data stores (e.g., payer specific data, Issuer specific data, Value store specific data, Merchant specific data, and transaction historical data). It gets all payment context data by passing token data to token service and applies AI/ML model to find out value store specific benefits. It uses ML model such as Random Forest Classifier and Logistic regression model to compute the benefits. FIG. 5, with reference to FIGS. 1 through 4, depicts a block diagram illustrating a benefit computation engine comprised in the first entity 100, in accordance with an embodiment of the present disclosure.

The system/first entity 100 then proceeds to form various permutations and combinations of these shortlisted value stores and derive benefits at combination level. This is done to address scenarios where one value store may not be able to give optimal benefits to the first entity/payer. For example, a discount coupon may be applicable up to a certain amount which is less than transaction value or redeeming reward points may result in an amount that is significantly less than transaction value. So, combining such a value store with other value stores can result in additional benefits to the payer/second entity.

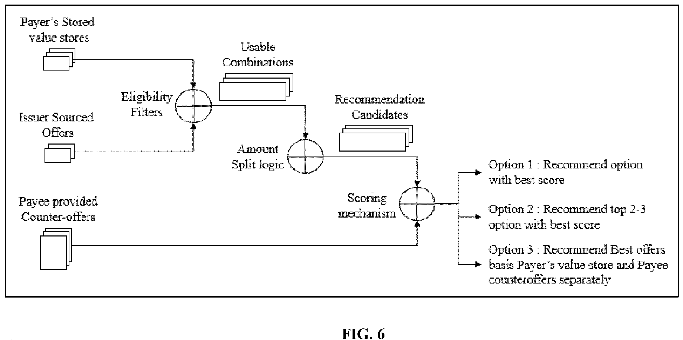

Post computation of the benefits of multiple permutations and combinations of value stores, the system/first entity 100 shortlists the best combination offering the most benefit to the consumer/second entity using a recommendation engine as depicted in FIG. 6. FIG. 6 with reference to FIGS. 1 through 5, depicts a block diagram illustrating a recommendation engine comprised in the first entity 100, in accordance with an embodiment of the present disclosure.

The recommendation engine computes the optimal combination of value stores that if used would result in benefit to the payer. The inputs for recommendation engines are value store specific benefits as computed by benefits computation engine, any dynamic offers that Issuer introduces or sources, any offers that Payee has made while requesting the settlement of promise to pay token, payer's history - how Payer has been making payments? Does Payer seem to prefer some recommendations over others? understanding of the cross compatibility of shortlisted value stores (that will help in narrowing down the possible combinations). The problems that the recommendation engine needs to/will solve (in given order) are as follows:

1. First and foremost, what are the different possible combinations?

a. Each Combination can have at least 1 and at most all cross-compatible value stores.

2. In each combination, how the payment amount should be split between different value stores?

a. Essentially each combination may have multiple ways to split amount,
b. In some cases, split may be forced e.g. a voucher of specific amount or outstanding reward points of specific value etc.
c. What are resultant benefits of splitting for each combo?

i. Each combination can potentially have at least one and possibly more benefits. E.g. redemption of reward points + cashback on credit card

3. Which combination results in most benefits to payer?

a. How to determine the 'most' benefits?

ii. Is it number of benefits?
iii. Do some benefits like discount get more weight than others like earning accelerated rewards? If yes, who sets these weights?
iv. What gets more priority between competing benefits?

1. E.g. Combo 1 gives cashback vs Combo 2 gives accelerated rewards vs Combo 3 involves redeeming expiring voucher and hence would result in less cashback/rewards?
2. Perhaps this is where Payer's history will help in further prioritizing.
3. Does it them make sense to give multiple options to Payer to choose from rather than only one?

v. How does it stack against the offer made by payee (if any)?

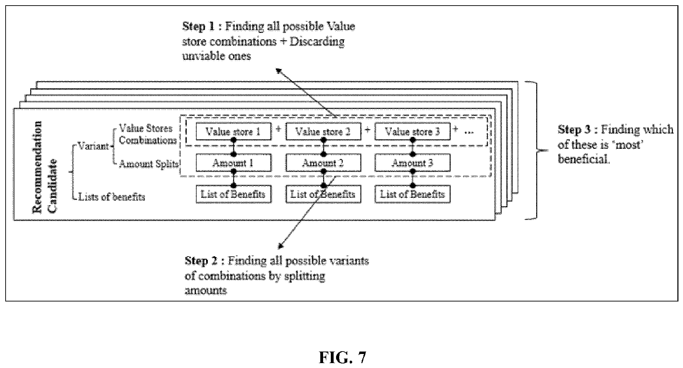

Now that problem statements are defined, below description is provided depicting on how the recommendation engine answer these questions. FIG. 7, with reference to FIGS. 1 through 6, depicts a visual representation of the recommendation engine solving problem statements for generating possible combinations of value stores, in accordance with an embodiment of the present disclosure.

1. **Question:** First and foremost, what are different possible combinations?

i. Each combination can have at least 1 and at most all cross-compatible value stores.
**Solution by the method of the present disclosure**

i. First, using simple binomial tree algorithm, all possible combinations of n number of objects is generated. N number of objects corresponds to the shortlisted value stores of Payer that are usable in the context of the payment.
ii. Next, each of these combinations are validated against the Payment Master Rules to eliminate those combinations where Value stores within the combinations are not cross compatible. For example, two credit cards cannot be used in same transaction (since it leads to bad customer experience).
iii. Next, each of the remaining combinations are validated against value store Master data to eliminate those combinations where

∘ There is only one value store in combination, and it has Balance less than transaction amount. For example, a gift card worth $50.00 but transaction amount is $100.00.
∘ There is only one value store in combination, and while it may have sufficient balance, it has Cap on amount that can be used per transaction which is less than transaction amount. For example, a wallet with $ 50.00 balance but restriction of $10.00 per transaction usage cannot be used in payment of $30.00.
∘ There are multiple value stores in combinations, but all have balance or cap on amount that can be used per transaction, such that adding their values up together also does not meet the transaction amount. For example, a combination with gift card of value $10.00 and Wallet balance of $20.00 cannot be used for making payment of $50.00.

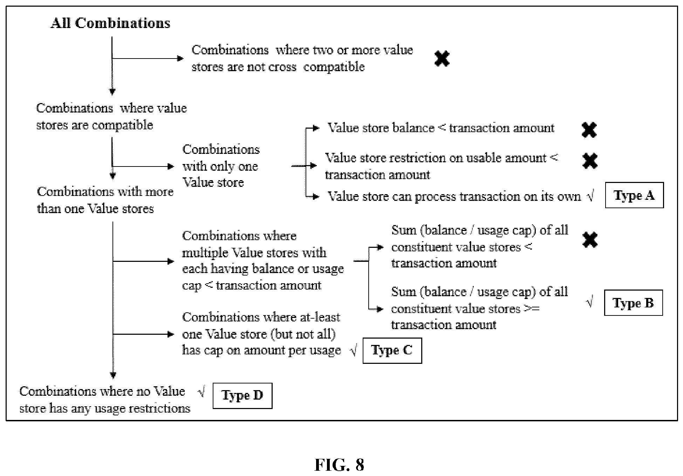

FIG. 8, with reference to FIGS. 1 through 7, shows a logical segregation of all possible combinations of value stores eligible for getting used in a payment in specific context, in accordance with an embodiment of the present disclosure. The ones marked with cross against them, should be eliminated by the system/first entity 100. While the ones with tick against them should be explored further in next step.

2. **Question:** In each combination, how the payment amount should be split between different value stores?

o Essentially each combo may have multiple ways to split amount,
◦ In some cases, split may be forced e.g. a voucher of specific amount or outstanding reward points of specific value etc.
◦ What are resultant benefits of splitting for each combo?

▪ Each combination can potentially have at least one and possibly more benefits. E.g. redemption of reward points + cashback on credit card

**Solution by the method of the present disclosure:**

Taking the shortlisted combinations from previous step, the system now needs to find how to split the transaction amount among constituents for each combination. The goal of this step is to find out all possible recommendation candidates from which final recommendation can be shortlisted in subsequent step. System adopts different approach to different types of combinations as listed below.

**Type A:** There is only one value store in combination with sufficient balance and cap on amount/transaction to process the required amount.

i. Clearly the easiest, where system simply assigns the transaction amount to the value store and uses the benefit computation provided earlier by the benefit computation engine.

**Type B:** There are multiple value stores in the combination where individual value stores have usage cap of amount per transaction which is less than transaction amount or have usage restrictions such as one time usage with amount less than transaction amount. However together these value stores can fulfil the transaction.

i. The likely outcome of using this combination is at least one value store will be used for amount less than its usage cap. The system needs to decide which value store should get more priority in terms of utilizing its entire threshold amount.
ii. There are two ways of processing this problem -

a. System simply creates more variants of same combinations by assigning shortfall amounts to different value stores in round robin fashion. E.g. if there are 3 combinations each with 3 value stores, system can assign full amount (to the extent of threshold) to 2 value stores and short fall to remaining value store in round robin fashion. In effect each of 3 combinations has 3 variants resulting in 3 x3 = 9 variants.
b. System looks at Payer's historical data to check the below logic-

i. Let us say X = number of days in which the value store expires
ii. Let us say Y = interval at which Payer uses this type of value store basis historical transactions data.
iii. Y will be shorter if historical frequency of transactions involving specific value store is more and
iv. Y will be longer if historical frequency of transactions involving specific value store is less.
v. If Y < X, it means that there is relatively higher likelihood that Payer will do another transaction where this value store can be used before it expires.
vi. If Y > X, it means that likelihood of Payer doing another transaction before value store expires is low. Hence it makes more sense that the priority is given to use this value store in current transaction to its full extent. (otherwise, it expires).
vii. For e.g., If Payer has a merchant specific voucher that expires in 30 days of doing present transaction and the historical data indicates that Payer usually shops at this merchant only once in 2 months then it makes sense for system to ensure that the voucher gets used fully in current transaction otherwise it will expire.
viii. Assign such value store full amount to the extent of threshold limit of its usage.
ix. Split the remaining amount among remaining value stores in round robin fashion (similar to point a above).

iii. Once the system generates all possible variants (combination of value stores + amount splits), it computes the benefits against each variant using the benefit computation engine. This essentially results in Recommendation candidates.

**Type C**: There are multiple value stores in the combination where at least one but not all value stores have usage cap of amount per transaction which is less than transaction amount or have usage restrictions such as one time usage with amount less than transaction amount.

  i. The difference between type B and type C combinations is, in type C there is at least one value store which does not have any usage restrictions. Hence, here is makes sense to use the value stores with restrictions fully and then allot remaining amount to value stores without restrictions.
  ii. If there is only one value store with restrictions in a combination, then system assigns that value store full amount to the extent of threshold amount.
  iii. If there are multiple value stores with restrictions, then -

    a. Full amount is assigned to all such value stores to the extent of respective threshold amount if their sum is less than transaction amount.
    b. If the full amount cannot be assigned to all value stores with restrictions, then -

      i. First minimum amount is assigned to value stores without restrictions as configured in the payment master rules.
      ii. For splitting the remaining amount among value stores with restrictions, priority is given basis Payer's historical transactions.

    c. System looks at Payer's historical data to check the below logic-

      i. Let us say X = number of days in which the value store expires
      ii. Let us say Y = interval at which Payer uses this type of value store basis historical transactions data.
      iii. Y will be shorter if historical frequency of transactions involving specific value store is more and
      iv. Y will be longer if historical frequency of transactions involving specific value store is less.
      v. If Y < X, it means that there is relatively higher likelihood that Payer will do another transaction where this value store can be used before it expires.
      vi. If Y > X, it means that likelihood of Payer doing another transaction before value store expires is low. Hence it makes more sense that the priority is given to use this value store in current transaction to its full extent. (otherwise, it expires).
      vii. For example, if Payer has a merchant specific voucher that expires in 30 days of doing present transaction and the historical data indicates that Payer usually shops at this merchant only once in 2 months then it makes sense for system to ensure that the voucher gets used fully in current transaction otherwise it will expire.
      viii. Assign such value store full amount to the extent of threshold limit of its usage.
      ix. Split the remaining amount among remaining value stores in round robin fashion.

  iv. Thus, system now gets multiple variants (combinations + amount splits) for which it computes the list of benefits using benefit computation engine to arrive at the respective recommendation candidates.

Type D: There are multiple value stores in a combination and none of the value stores have any restrictions.

  i. These are perhaps the most complex type of combinations since there are no factors to limit the number of possible variants basis amount splits. The system begins by first assigning to minimum amount against each value store as per payment master data rules.
  ii. The remaining amount is split equally between the value stores of the combination.

**3. Question: Which combination results in most benefits? How to determine the 'most' benefits?**

**Solution by the method of the present disclosure:**

i. Eventually this question must be answered by the system basis its understanding of Payer's preferences basis their historical transactions and their decisions of recommendations made by the system in the past (feedback loop in the diagram below).
ii. However, building such understanding takes time and hence following approach can be adopted.
iii. At the time of onboarding the Payer for promise to pay solution, a quick survey can be conducted to understand Payer's preferences like

i. What should system prioritize among discounts vs cashbacks vs rewards?

ii. Does user prefer redeeming coupons/rewards over getting cashbacks?

iii. And other such priorities. These can be scenario-based questions to make Payer's answer more intuitive.

iv. Either way, for every Payer, the system maintains a Benefit importance data where every Benefit type is assigned an importance on a scale of 1 to 10 with 10 being most important and 1 being least important. These factors are kept updated by the system depending upon Payer's acceptance/rejection of recommendations.

v. Recommendation candidates are ranked using ranking algorithm explained below.

i. Weight factor W1 is added to Recommendation Candidates involving Payee specific value stores like voucher/coupon etc. These candidates implicitly result in benefits to both Payer and Payee. E.g. Merchant issued voucher, Merchant specific Gift card etc.

ii. Weight factor W2 is added to Recommendation candidates involving restricted value stores that may not be Payee specific but usable at Payee. E.g. Food cards at restaurants, Health Benefit Cards at pharmacies etc.

iii. Weight factor W3 is added to recommendation candidates involving non-restricted value stores in proportion to the importance assigned by Payer to the associated benefits either explicitly through indication of choices (as explained above during onboarding) or as detected by system during analysis of Payer's historical transaction and acceptance/rejection of recommended choices. This is done through function explained below in Table 2.

Table 2

$$W3 = \sum_{i=1}^{n} Importance\ (Benefit\ type)_i$$

$$\times \frac{Amount\ assigned\ to\ value\ store\ giveing\ that\ Benefit\ type\ i)}{Total\ Transaction\ Amount}$$

Where, Importance = numerical weight assigned against each Benefit type on a scale of 1 to 10. Either computed basis Payer's initial responses during onboarding or using historical transaction preferences.

Benefit type = as defined in the system e.g. cashback, discount, earning rewards, redemption of rewards etc.

Transaction amount = Total transaction amount for which Promise to Pay token was exchanged.

Amount assigned to value store = Amount that will be paid using particular value store in case the combination gets recommended and accepted by Payer

iv. Hence for every Recommendation candidate the total weight $W = W1 + W2 + W3$.

v. While the value of $W3$ is computed, the values of $W1$ and $W2$ are system configurations where maximum values assigned to $W1$ and $W2$ is equal to the maximum importance factor that can be assigned to any benefit i.e. 10 in above example since scale was from 1 to 10.

1. This in effect ensures equal weights to $W1$, $W2$, and $W3$.

vi. After computing resulting total weights for every Recommendation candidate, the candidate with highest weight is ranked number 1 and shortlisted for further comparison with Payee provided counteroffer if any.

4. **Question:** How does it stack against the offer made by payee (if any)?

**Solution by the method of the present disclosure:**

i. The system analyses the Payee counteroffer using similar but not same empirical parameters. It is important to consider that unlike Issuer, the Payee is unaware of Payer's value stores and hence may not factor in those while making counteroffer.

ii. The Payee has only considered the type of value store assigned as default against the token e.g. if it is a credit card or debit card etc.

iii. Hence any counteroffer from Payee is likely to contain value store types that solely based upon the cost factor from Payee's perspective and benefits that are of types of discounts or cashbacks etc.

iv. The Payer may be entitled to additional benefits from using value stores in counteroffer. E.g. Payee's counteroffer may contain usage of Debit card instead of Credit card for which Payee is prepared to offer 2% cashback. However, the Debit Card available with Payer may entitle him/her for additional 1% reward points from Debit card Issuer.

v. It is also likely that Payees counteroffer will made be of up of single value store, however the system is equipped to handle multiple value store scenario.

vi. The system computes list of benefit if Payer uses the value store types as mentioned in Payee's counteroffer.

vii. Similar score of W3 is computed for the Payee counteroffer as explained above. This does not consider additional benefit offered by Payee, but just specific benefits tagged against the value store.

viii. The system then compares W3 alone of the shortlisted recommended candidate with W3 of Payee counteroffer.

ix. The combination with higher W3 gets finalized as recommendation to the Payer.

In other variants, the system may recommend (i) both shortlisted candidate and payee counteroffers to Payer for decision, (ii) recommend more than one shortlisted candidate (e.g. top 3 scores), etc.

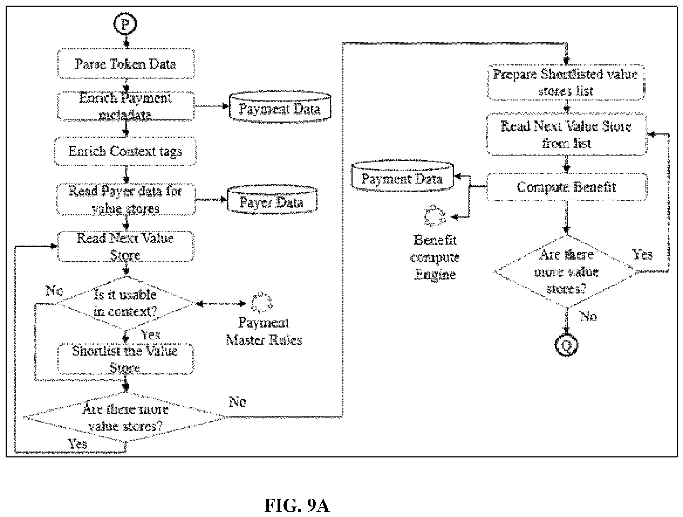

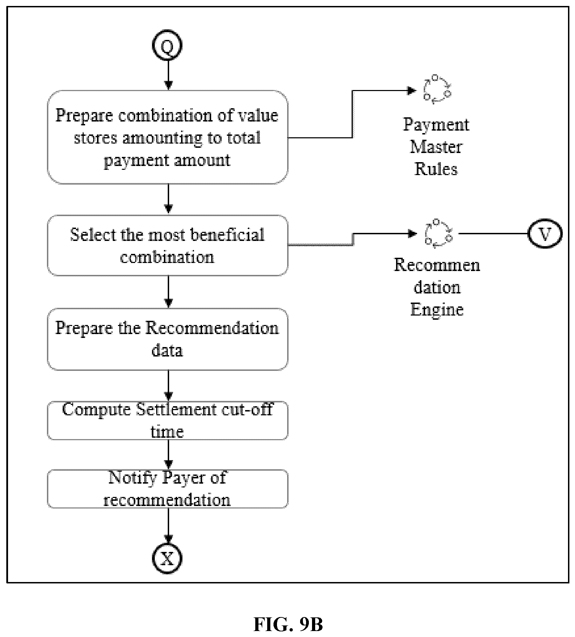

In one scenario, the system/first entity 100 also takes into consideration the payer past actions (acceptance or rejections) of the past recommendations made by the system/first entity 100 to arrive at the decision of which recommendation should be shown to the payer. In another scenario, the system/first entity may share multiple recommendations with the payer/second entity. The system/first entity 100 then computes the cut-off time by which it expects the payer/second entity to submit the decision on recommendation(s) made (e.g., also referred to as 'expiration time for selection of the one or more recommended value stores'). This gets communicated to the payer along with the recommendation(s). FIGS. 9A and 9B, with reference to FIGS. 1 through 8, depict a flow diagram illustrating a method for generating one or more recommended value stores based on the validated payment token and a second set of transaction affecting parameters, in accordance with an embodiment of the present disclosure. As can be seen from FIGS. 9A and 9B, the inputs also flow from FIG. 4 through the connector 'P' and 'V', respectively which in this case is the authentication/authorization confirmation.

There are many attributes related to payment Context, tender properties, user preferences, past user actions, technical constraints are considered along with their weightages are provided as input data to Content based and Collaborative Filtering approach using LightFM ML model to find out multi tender payment recommendations.

In effect, the payer gets prompted about impending settlement decision with clear view of a) system/first entity recommended combination of value store(s) to honor the payments, b) cut-off time by which payer is expected to accept or reject the recommendation(s) and c) original value store tagged against the token than will get used in case the payer rejects the system recommendation or does not submit any decision by cut-off time. In other words, at step 216 of the method of the present disclosure, the first entity 100, via the one or more hardware processors 104 identifies at least one recommended value store amongst the one or more recommended value stores based on one of (i) a selection of a recommended value store, (ii) an acceptance or rejection of the one or more recommended value stores, or (iii) an expiration time for selection of the one or more recommended value stores. In one embodiment, the step of generating the one or more recommended value stores is based on an associated weightage computed for each transaction parameter amongst the second set of transaction affecting parameters. In one embodiment, he one or more recommended value stores are generated based on at least one of (i) an associated benefit of using one or more value stores in a specific context of the transaction, and (ii) a mapped data of one or more benefits being offered by the third entity with the one or more value stores as mentioned above. The second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location (e.g., geography, jurisdiction) specific to the transaction. The above examples of the second set of transaction affecting parameters shall not be construed as limiting the scope of the present disclosure.

At step 218 of the method of the present disclosure, the first entity 100 processes, the one or more hardware processors 104, a payment settlement specific to the payment request and the transaction based on the at least one identified recommended value store. The above step 218 is better understood by way of the following description:

The system 100, after informing the payer about the recommended way of settling the transaction, waits for the payer to submit a decision till the cut-off time. The time window between the system/first entity 100 recommending and cut-off time can be a few hours to days depending upon the settlement arrangements between the payee and the issuer/first entity 100.

If the Payer does not submit any decision prior to cut-off time, then the first entity 100 proceeds with settlement using the default value store tagged by the payer against the token as mentioned in step 216. This is done by removing the hold on the default value store and initiating the charge of the required amount. Depending upon the value store properties, this may happen in one step or more than one steps.

If the payer accepts the recommendation made by the system/first entity, then the system/first entity 100 starts processing the settlement as per recommendation. Since more than one value stores may be involved in the settlement, the system/first entity 100 first formulates the sequence of execution of the value stores. Priority is first given to those value stores that are internal to the first entity/third entity (e.g., issuer or payee) since they are more likely to succeed without any issues. Post these internal value stores, 3rd party value stores are taken up for execution as per the value store wise breakup decided during the recommendation formulation stage. The payment master rules also include cross value store compatibility rules which ensure that recommended combination do not contain the value stores that cannot be executed together e.g., multiple third party credit cards or methods that require batch processing like ACH, etc.

Once the sequence of execution is determined, the system/first entity 100 starts executing transactions on the value stores one by one in determined order and as per the amount breakup decided in recommendation phase. If for reasons outside its control, any of these execution legs fail then the system/first entity 100 parks such transaction aside for a moment and proceeds with remaining legs. At the end, if the system/first entity 100 is unable to process the failed transaction legs, then the combined about of such failed legs is charged on the default value store tagged by the payer/second entity on which there is still a hold. The system/first entity 100 does not remove this hold on default value store until either all the transaction legs of recommended value store combination are successful, or the failed legs get processed using the default value store. The step 218 of settlement process is further better understood by way of the following description:

It is important to understand how the settlement process of the method of the present disclosure is different from the prevailing settlement processes. Settlement is a process by which the payee or receiver of the payment gets a final and complete access to the funds for any further use.

As a rule of thumb, settlements tend to happen in aggregate and deferred manner, i.e., multiple transactions to same payee are clubbed together and corresponding funds are aggregated and settled to Payee at specific time intervals. While the real time payment rails like UPI, FedNow, etc. make this process seem instantaneous, it is important to note that while the payee receives the funds immediately, in the background, the settlement of funds between the payer's financial institution and payee's financial institution are still done in deferred and aggregated manner.

Perhaps the most important aspect, in context of method of the present disclosure is that all the settlement processes in the market today are value store specific, i.e., depending upon if the value store is credit card or bank account or ewallet, the steps in the settlement process change. Depending upon the value store used in making payments, different actors may get involved in each of the above steps, different market infrastructure may get used in transfer of funds etc.

The present disclosure looks at this aspect in more details with following specific examples.

Settlement process from Merchant's perspective for Credit Card transactions:

The merchant (through either PoS backend or Payment service provider (PSP)) initiates the settlement process by sharing the transaction data (batch files) with the acquiring institution. The Acquiring institution reconciles the payments (counts, values, responses etc.) as part of Payment reconciliation process. It then computes the total amount per batch along with corresponding charges etc. which are then shared with corresponding card networks like VISA, Mastercard, etc. This is the settlement initiation phase. The networks in turn perform their own reconciliations using the data received, their own records and the data shared by issuing financial institutions. Basis this the intitution level payables and receivable files are formed and shared back with financial institutions along with reconciliation files as per original batches shared by institutions. Since institutions are now aware of net payables and receivables positions against their counterparts, the final funds transfers are done using the pre-agreed market infrastructure like SWIFT, RTGS, etc.

Another example is eWallet settlements that are structurally different because unlike Cards or Banking networks, eWallet networks are not universally present or interoperable. Hence whereas the settlements in cards and banking networks are initiated by the Payee (Merchant in above example), in the eWallet system, the settlements are initiated by the eWallet issuer at as predefined frequency as agreed upon by the eWallet issuer and Payee in their commercial agreement.

Here, the Payee generally provides a reconciliation file back to eWallet issuer (or vice-versa) using which the payments are first reconciled. Post reconciliation, the eWallet system computes the total amount that needs to be settled with Payee and the settlement is initiated via Banking partner. The transfer of funds from eWallet Issuers bank account to Payee's bank account occurs over market infrastructure like RTGS, NEFT, ACH etc.

To summarize, conventional settlement processes are aimed at transferring the funds to payee. These settlement processes vary depending upon the underlying value store. Once the payment is picked up for settlement, there is no scope for altering the underlying value store used for payment.

As described above, the entire payment process is made of two steps. Payment step: process of verifying the authenticity and credibility of Payer to honour the payment obligation (authenticity of payer, value store, funds availability etc.). Settlement step: process of transferring the funds to Payee to give it a final and complete control over the usage of the funds. The method of the present disclosure leverages the various value stores available in the market and hence by implication also seeks to leverage the value store specific settlement practices available in the market.

The method of the present disclosure is not a part of settlement step, but the part of payment step itself. The method of the present disclosure involving settlement is a process by which the Issuer provides flexibility to Payer (by means of intelligent recommendation process) to alter the underlying value store that was designated for use earlier, the issuer basis the Payer's acceptance or rejection or inaction, coverts the transaction into one or more payment transactions using the selected value stores. In effect, the method of the present disclosure involving settlement results into start of conventional value store specific payment processes (eventually to be followed by value store specific settlement processes).

While a conventional settlement process seeks to transfer funds into payee's account, the method of the present disclosure involving settlement of funds seeks to understand which conventional value stores should be used to initiate the payment from Payer to Payee and then initiate those payments.

As detailed in the process flows, the precursor to settlement described in the method of the present disclosure, is the recommendation that the first entity 100 has submitted to the Payer regarding which value stores are best suited for making the payment. The system 100 expects the Payer to submit the decision in a specific time frame, communicated to the Payer along with the recommendation.

Different value stores have different processing timelines. For e.g., a Credit Card transaction is expected to get authorized in matter of seconds whereas an ACH transaction could take up to a few hours depending upon the ACH network in the market. The average time of the method of the present disclosure as negotiated between Issuer and the Payee, is a function of these value store specific complexities. It is sufficiently large enough to give Payer enough time to act on recommendations while at same time, it cannot be so long that Payee does not see any benefit in accepting the payments.

In one embodiment of the method of the present disclosure, the Issuer may even provide flexibility to Payee to decide which specific value stores it does not want to accept as part of this arrangement. This allows Payee to control the timeline by declining value stores that have longer processing timelines like ACH at the expense of losing the lower cost advantages.

In another scenario of the method of the present disclosure, the Issuer may also consider including Payer specific historical data as an additional factor in deciding the time frame.

There are three possible scenarios with respect to Payer's decision of recommendations generated by the method of the present disclosure.

Scenario 1: Payer accepts the recommendation provided by system. Naturally, this decision must be submitted within the timeframe provided by the system at the time of providing recommendations. Once the system receives this decision, the system gets a clarity on which value store(s) are to be used for making payment to Payee, and what is the value store specific amount.

The system now needs to determine in which sequence the payment legs need to be initiated for these value stores. The system uses following logic to arrive at this: value stores which are internal to Payee are used first e.g. Payee issued voucher or eWallet, value stores which are internal to Issuer itself are used next e.g. Cards or Bank accounts of Payer which are held with Issuer itself, and value stores which are external to both Payee and the Issuer are taken last, e.g., third-party credit cards.

This logic is aimed at limiting the risk exposure from both Payee and Issuer's perspective. The value stores internal to Payee or Issuer are expected to be less risky (from point of view of processing times and success rate predictability). Third party value stores processing involves third parties like respective market infrastructure players (e.g. VISA/Mastercard network in case of Cards) and respective intermediaries and issuers. Hence these are expected to take more time to execute and have more touchpoints where payment can fail or get delayed.

Once the system starts executing these payments in determined sequence, there is always a chance; specifically in case of third-party value stores, that payment fails or gets timed out or the end points of processing the payment is not reachable. In such a scenario, depending upon the value store the system may either retry or consider it as failure and park the payment specific to that value store for a while and proceed with the remaining payment legs involving other value stores that were part of the recommendation.

Once all the payment legs are processed, system returns to the legs that have failed. The collective amount of such payment legs is then aggregated. The system then uses the default value store which the Payer had originally tagged while requesting the token generation. Since the System had put a lien or hold on this default value store at time of token generation, the system now uses it to pay for the remaining amount belonging to failed legs.

Post such processing, the system releases the hold on default value store. If all the payment legs of recommendation go through successfully, then system releases the hold on default value store in its entirety.

Scenario 2: The Payer rejects the recommendation provided by the system. Naturally, this decision must be submitted within the timeframe provided by the system at the time of providing recommendations. Once system receives the rejection decision, the system knows it needs to use the default value store tagged by the Payer at time of requesting token generation. The system proceeds with payment initiation with default value store. The system already has a lien/hold on the default value store.

Scenario 3: The payer fails to submit any decision within stipulated time frame. Since the Payer fails to submit a decision, the Issuer treats this as a deemed rejection of the recommendation and proceeds with processing the payment using the default value store tagged by the Payer at the time of requesting token generation.

In a variation of the method of the present disclosure, the Issuer may also offer an option to Payer to decide, if lack of decision should be treated as deemed acceptance or deemed rejection. A deemed acceptance scenario works in same manner as Payer accepting the recommendation. The system proceeds with recommended value stores as detailed in scenario 1 above.

At the end of all three possible scenarios, the system 100 intimates both Payer and Payee about the initiation of Payments with specific details of value stores used, respective amounts and current transaction statuses. From here onwards, the individual legs of the payments are processed as per conventional payment processing. The final settlement of these legs and related process details are as per conventional market practices and hence are outside the ambit of approach.

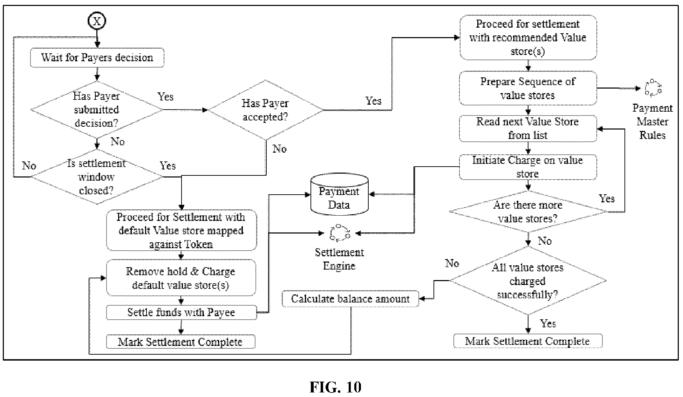

FIG. 10, with reference to FIGS. 1 through 9, depicts a flow diagram illustrating a method for processing a payment settlement specific to the payment request and the transaction based on the at least one identified recommended value store, in accordance with an embodiment of the present disclosure. As can be seen from FIG. 10, the inputs also flow from FIG. 9B through the connector 'Q', which in this case is the recommendations that are notified to the payer (e.g., the second entity). Hence, by performing the steps 202 through 218 of the method of the present disclosure, the system 100 achieves delinking of value store selections from payment step and possibly swapping of value stores between token generation and token settlement specific to a transaction performed by the second entity with the third entity.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

   receiving by a first entity, via one or more hardware processors, a payment request from a first device associated with a second entity, wherein the payment request is specific to a transaction being performed with a third entity (202);

   capturing by the first entity, via the one or more hardware processors, a payment honoring intent associated with the payment request (204);

   generating by the first entity, via the one or more hardware processors, an encrypted intent specific payment token comprising the captured payment honoring intent and a first set of transaction affecting parameters specific to the payment request (206), wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request;

   transmitting by the first entity, via the one or more hardware processors, the encrypted intent specific payment token to the first device associated with the second entity (208), wherein the encrypted intent specific payment token is transmitted to a second device associated with the third entity, from the first device associated with the second entity;

   obtaining by the first entity, via the one or more hardware processors, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity (210);

   validating by the first entity, via the one or more hardware processors, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token (212);

   generating by the first entity, via the one or more hardware processors, one or more recommended value stores based on the validated payment token and a second set of transaction affecting parameters (214);

   identifying by the first entity, via the one or more hardware processors, at least one recommended value store amongst the one or more recommended value stores based on one of (i) a selection of a recommended value store, (ii) an acceptance or rejection of the one or more recommended value stores, or (iii) an expiration time for selection of the one or more recommended value stores (216); and

   processing by the first entity, via the one or more hardware processors, a payment settlement specific to the payment request and the transaction based on the at least one identified recommended value store (218).

2. The processor implemented method as claimed in claim 1, wherein the step of generating the one or more recommended value stores is based on an associated weightage computed for each transaction parameter amongst the second set of transaction affecting parameters.

3. The processor implemented method as claimed in claim 1, wherein the one or more recommended value stores are generated based on at least one of (i) an associated benefit of using one or more value stores in a specific context of the transaction, and (ii) a mapped data of one or more benefits being offered by the third entity with the one or more value stores.

4. The processor implemented method as claimed in claim 1, wherein the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

5. A first entity (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive a payment request from a first device associated with a second entity, wherein the payment request is specific to a transaction being performed with a third entity;

capture a payment honoring intent associated with the payment request;

generate an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request;

transmit the encrypted intent specific payment token to the first device associated with the second entity, wherein the encrypted intent specific payment token is transmitted to a second device associated with the third entity, from the first device associated with the second entity;

obtain (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity;

validate the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token;

generate one or more recommended value stores based on the validated payment token and a second set of transaction affecting parameters;

identify at least one recommended value store amongst the one or more recommended value stores based on one of (i) a selection of a recommended value store, (ii) an acceptance or rejection of the one or more recommended value stores, or (iii) an expiration time for selection of the one or more recommended value stores; and

process a payment settlement specific to the payment request and the transaction based on the at least one identified recommended value store.

6. The system as claimed in claim 5, wherein the step of generating the one or more recommended value stores is based on an associated weightage computed for each transaction parameter amongst the second set of transaction affecting parameters.

7. The system as claimed in claim 5, wherein the one or more recommended value stores are generated based on at least one of (i) an associated benefit of using one or more value stores in a specific context of the transaction, and (ii) a mapped data of one or more benefits being offered by the third entity with the one or more value stores.

8. The system as claimed in claim 5, wherein the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

9. One or more non-transitory machine-readable information storage mediums comprising one or more instructions which when executed by one or more hardware processors cause:

receiving by a first entity, a payment request from a first device associated with a second entity, wherein the payment request is specific to a transaction being performed with a third entity;

capturing by the first entity, a payment honoring intent associated with the payment request;

generating by the first entity, an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request;

transmitting by the first entity, the encrypted intent specific payment token to the first device associated with the second entity, wherein the encrypted intent specific payment token is transmitted to a second device associated with the third entity, from the first device associated with the second entity;

obtaining by the first entity, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity;

validating by the first entity, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token;

generating by the first entity, one or more recommended value stores based on the validated payment token and a second set of transaction affecting parameters;

identifying by the first entity, at least one recommended value store amongst the one or more recommended value stores based on one of (i) a selection of a recommended value store, (ii) an acceptance or rejection of the one or more recommended value stores, or (iii) an expiration time for selection of the one or more recommended value stores; and

processing by the first entity, via the one or more hardware processors, a payment settlement specific to the payment request and the transaction based on the at least one identified recommended value store.

10. The one or more non-transitory machine-readable information storage mediums as claimed in claim 9, wherein the step of generating the one or more recommended value stores is based on an associated weightage computed for each transaction parameter amongst the second set of transaction affecting parameters.

11. The one or more non-transitory machine-readable information storage mediums as claimed in claim 9, wherein the one or more recommended value stores are generated based on at least one of (i) an associated benefit of using one or more value stores in a specific context of the transaction, and (ii) a mapped data of one or more benefits being offered by the third entity with the one or more value stores.

12. The one or more non-transitory machine-readable information storage mediums as claimed in claim 9, wherein the second set of transaction affecting parameters comprises at least one of (i) one or more preferred payment methods, (ii) one or more saved value stores, (iii) a historical transaction, (iii) a type of product associated with the transaction, (v) a type of service associated with the transaction, (vi) an entity type associated with the third entity, (vii) the one or more offers provided to the second entity by the third entity, (viii) one or more mapped available offers and one or more value stores, (ix) a failure status of one or more specific tenders, and (x) one or more associated regulations in a location specific to the transaction.

SYSTEM
100

MEMORY
102

DATABASE
108

HARDWARE PROCESSOR(S)
104

INTERFACE(S)
106

**FIG. 1**

receiving by a first entity, via one or more hardware processors, a payment request from a first device associated with a second entity, wherein the payment request is specific to a transaction being performed with a third entity 〜 202

↓

capturing by the first entity, via the one or more hardware processors, a payment honoring intent associated with the payment request 〜 204

↓

generating by the first entity, via the one or more hardware processors, an encrypted intent specific payment token comprising the captured payment honoring intent and a first set of transaction affecting parameters specific to the payment request, wherein the first set of transaction affecting parameters comprises at least one of (i) a purpose, (ii) a validity, and (iii) risk details of the second entity, (iv) an associated condition honoring the intent specific payment token, and (v) a default value store linked to the encrypted intent specific payment token, and wherein during the generation of the encrypted intent specific payment token, the first entity blocks a pre-defined amount in the default value store that is specific to the payment request 〜 206

↓

transmitting by the first entity, via the one or more hardware processors, the encrypted intent specific payment token to the first device associated with the second entity (208), wherein the encrypted intent specific payment token is transmitted to a second device associated with the third entity 〜 208

↓

obtaining by the first entity, via the one or more hardware processors, (i) a token validation pertaining to the encrypted intent specific payment token and (ii) the encrypted intent specific payment token from the third entity based on a verification of at least one of (i) one or more specific credentials associated with the first entity and the second entity, (ii) a risk score that is dynamically computed for the second entity 〜 210

↓

(A)

**FIG. 2A**

Ⓐ

validating by the first entity, via the one or more hardware processors, the encrypted intent specific payment token obtained from the second entity based on at least one of (i) the default value store linked to the encrypted intent specific payment token, (ii) one or more offers provided to the second entity by the third entity based on the default value store, and (iii) one or more transaction affecting parameters amongst the first set of transaction affecting parameters to obtain a validated payment token

212

generating by the first entity, via the one or more hardware processors, one or more recommended value stores based on the validated payment token and a second set of transaction affecting parameters

214

identifying by the first entity, via the one or more hardware processors, at least one recommended value store amongst the one or more recommended value stores based on one of (i) a selection of a recommended value store, (ii) an acceptance or rejection of the one or more one or more recommended value stores, or (iii) an expiration time for selection of the one or more recommended value stores

216

processing by the first entity, via the one or more hardware processors, a payment settlement specific to the payment request and the transaction based on the at least one identified recommended value store

218

**FIG. 2B**

**FIG. 3**

**FIG. 4**

**FIG. 5**

**FIG. 6**

**FIG. 7**

**All Combinations**

Combinations where two or more value stores are not cross compatible ✖

Combinations where value stores are compatible

Combinations with only one Value store

Value store balance < transaction amount ✖

Value store restriction on usable amount < transaction amount ✖

Value store can process transaction on its own √ | Type A |

Combinations with more than one Value stores

Combinations where multiple Value stores with each having balance or usage cap < transaction amount

Sum (balance / usage cap) of all constituent value stores < transaction amount ✖

Sum (balance / usage cap) of all constituent value stores >= transaction amount √ | Type B |

Combinations where at-least one Value store (but not all) has cap on amount per usage √ | Type C |

Combinations where no Value store has any usage restrictions √ | Type D |

**FIG. 8**

**FIG. 9A**

**FIG. 9B**

**FIG. 10**

Europäisches
Patentamt

European
Patent Office

Office européen
des brevets

# EUROPEAN SEARCH REPORT

**Application Number**

EP 25 18 9221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 621 576 B1 (KANNANARI AHAMED [US]) 14 April 2020 (2020-04-14) <br> * column 3, line 28 - line 32 * <br> * column 3, line 32 - line 41 * <br> * column 3, line 37 - line 39 * <br> * column 4, line 16 - line 23 * <br> * column 10, line 7 - line 16 * <br> * column 4, line 43 - line 53 * <br> * column 3, line 32 - line 34 * <br> * column 4, line 24 - line 27 * <br> * figure 2b * <br> * column 5, line 37 - line 56 * <br> * column 6, line 30 - line 35 * <br> * column 6, line 35 - line 41 * <br> * column 9, line 38 - line 51 * <br> * column 6, line 39 - line 51 * <br> ----- | 1-12 | INV. <br> G06Q30/0601 <br><br> ADD. <br> G06Q90/00 |

**TECHNICAL FIELDS SEARCHED (IPC)**

G06Q

The present search report has been drawn up for all claims

| Place of search | Date of completion of the search | Examiner |
|---|---|---|
| The Hague | 1 December 2025 | Papanikolaou, N |

## ANNEX TO THE EUROPEAN SEARCH REPORT
## ON EUROPEAN PATENT APPLICATION NO.

EP 25 18 9221

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | | Publication date | Patent family member(s) | | Publication date |
|---|---|---|---|---|---|
| US 10621576 | B1 | 14-04-2020 | US | 8682802 B1 | 25-03-2014 |
| | | | US | 10621576 B1 | 14-04-2020 |

EPO FORM P0459

For more details about this annex : see Official Journal of the European Patent Office, No. 12/82

**EP 4 726 636 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421077862